## Europäisches Patentamt
## European Patent Office
## Office européen des brevets

(11) Veröffentlichungsnummer: **0 237 834 B1**

(12) # EUROPÄISCHE PATENTSCHRIFT

(45) Veröffentlichungstag der Patentschrift: **12.06.91**

(51) Int. Cl.5: **H04M 3/50**

(21) Anmeldenummer: **87102587.0**

(22) Anmeldetag: **24.02.87**

(54) **Verfahren zur Verwaltung der von Subsystemen auszuführenden Dienste einer rechnergesteuerten Vermittlungsanlage und Vorrichtung zur Durchführung des Verfahrens.**

(30) Priorität: **21.03.86 DE 3609686**

(43) Veröffentlichungstag der Anmeldung:
**23.09.87 Patentblatt 87/39**

(45) Bekanntmachung des Hinweises auf die Patenterteilung:
**12.06.91 Patentblatt 91/24**

(84) Benannte Vertragsstaaten:
**AT CH DE FR GB IT LI**

(56) Entgegenhaltungen:
**DE-A- 3 132 474**

(73) Patentinhaber: **Siemens Aktiengesellschaft Wittelsbacherplatz 2 W-8000 München 2(DE)**

(72) Erfinder: **Selmeier, Anton, Dipl.-Ing. Augsburgerstrasse 45 W-8034 Germering(DE)**
Erfinder: **Brence, Hermann, Dipl.-Ing. Ludwig Thoma Strasse 12 W-8152 Feldkirchen-Westerham(DE)**

**Beschreibung**

Die Erfindung betrifft ein Verfahren zur Verwaltung der von Subsystemen auszuführenden Dienste einer rechnergesteuerten Vermittlungsanlage, deren Subsysteme in einzelne, gleichartige Baugruppen unterteilt sind, die zur Inanspruchnahme des Dienstes jeweils Teilnehmeranschlüssen individuell zugeordnete Speicherfächer enthalten, wobei die Teilnehmeranschlüsse von einer Vermittlungseinheit angeschaltet werden.

Ein vergleichbarer Stand der Technik ist auch aus der DE-A-3 132 474 bekannt.

Moderne Nebenstellen-Vermittlungsanlagen bieten den angeschlossenen Teilnehmern neben der eigentlichen Vermittlungsfunktion zahlreiche zusätzliche Funktionen und Dienste, insbesondere "Mailbox" und "Voice Mail", an. Diese Dienste werden meist von Subsystemen ("Server") der Vermittlungsanlage abgewickelt. Zur Erzielung einer ausreichenden Leistungsfähigkeit sind diese Subsysteme modular aus gleichartigen Baugruppen zusammengestellt. Bei diesem Aufbau führt aber eine starke Kommunikation zwischen den einzelnen Baugruppen zur Vermittlung des Dienstes zu einem Sinken der tatsächlichen Vermittlungsleistung zu den Teilnehmeranschlüssen.

Die Aufgabe der Erfindung ist es, eine ausreichende Leistungsfähigkeit der Subsysteme auch bei stärkerer Inanspruchnahme zu gewährleisten.

Dies wird dadurch erreicht, daß jeder Teilnehmeranschluß von der Vermittlungseinheit an ein Verwaltungsmodul angeschaltet wird, von dem das Speicherfach des rufenden oder gerufenen Teilnehmeranschlusses und die diesem Speicherfach zugeordnete Baugruppe festgestellt wird und daß vom Verwaltungsmodul die Vermittlung des Dienstes zwischen dem Speicherfach und dem Teilnehmeranschluß gesteuert wird.

Dadurch wird die Belegung der einzelnen Baugruppen von einer zentralen Einheit, dem Verwaltungsmodul, überwacht und gesteuert. Eine Kommunikation zwischen den Baugruppen muß nur in Ausnahmefällen stattfinden. Bei Erweiterung der Vermittlungsanlage sind lediglich die Subsysteme um einzelne Baugruppen zu ergänzen und die Zuordnung der Teilnehmeranschlüsse im Verwaltungsmodul einzutragen; die Erweiterung der Subsysteme wirkt sich somit nicht auf die Vermittlungseinheit aus. Je nach Bedarf kann ein Verwaltungsmodul je Vermittlungseinheit, je Subsystem oder je Baugruppe eingesetzt werden. Die statische Zuordnung der Teilnehmer zu den Baugruppen ermöglicht die Lastaufteilung.

Bei einem Dienst des Verteilens von Nachrichten von einem Speicherfach zu Speicherfächern, die in anderen Baugruppen enthalten sind, wird eine Kommunikationsauftragsinformation an die anderen Baugruppen gesandt und bei den gerufenen Speicherfächern hinterlegt. Dadurch werden diese Nachrichten quasi "off-line" mit einer anderen Verbindung an die Teilnehmer übermittelt. Das erspart das mehrfache Speichern dieser Nachrichten in den einzelnen Speicherfächern. Es ist aber auch möglich, daß bei einem Dienst des Verteilens von Nachrichten von einem Speicherfach zu Speicherfächern, die in anderen Baugruppen enthalten sind, über die Vermittlungseinheit die Verbindung zu den Baugruppen hergestellt und die Nachricht an die gerufenen Speicherfächer übertragen wird. Diese "on-line"-Übertragung über die bereits bestehende Verbindung ist insbesondere bei "Voice Mail" vorteilhaft, da der Teilnehmer die Nachricht sofort empfangen kann.

Insbesondere bei Vorhandensein einer großen Anzahl von Baugruppen ist es vorteilhaft, daß jeder Baugruppe ein Verwaltungsmodul zugeordnet wird, wobei diese Zuordnung zur Anschaltung des Teilnehmeranschlusses an die zugehörige Baugruppe in der Vermittlungseinheit gespeichert wird. Die einzelnen Verwaltungsmodule sind dadurch von einer überschaubaren Größenanordnung und die Anschaltung eines Teilnehmeranschlusses an die jeweilige Baugruppe wird zwischen Vermittlungseinheit und Verwaltungsmodul aufgeteilt. Dadurch wird auch bei größeren Vermittlungsanlagen Überschaubarkeit und einfache Bedienbarkeit gewährleistet; die Leistungsfähigkeit bleibt erhalten.

Um eine Änderung der Zuordnung von Teilnehmeranschlüssen zu einzelnen Baugruppen bzw. eine Erweiterung der Subsysteme nur im jeweiligen Verwaltungsmodul verzeichnen zu müssen und auch fehlerbedingte falsche Zuordnungen von Teilnehmeranschlüssen korrigieren zu können, ist es vorteilhaft, daß vom jeweiligen Verwaltungsmodul bei falscher Vermittlung eines Teilnehmeranschlusses durch die Vermittlungseinheit die richtige Baugruppe des Speicherfaches der Vermittlungseinheit gemeldet, die falsche Nummer der Baugruppe von der Vermittlungseinheit korrigiert und der Anruf von der Vermittlungseinheit auf die richtige Baugruppe umgekoppelt wird. Ist die Vermittlungsanlage ISDN-fähig, so wird bei falscher Vermittlung des Signalisierungskanals, D-Kanal, vom Verwaltungsmodul die richtige Baugruppe ermittelt, eine Verbindung mit Kommunikationsauftrag zwischen richtiger und falscher Baugruppe hergestellt und der auszuführende Dienst übermittelt und es wird von der richtigen Baugruppe über deren Verwaltungsmodul die Nummer der falschen Baugruppe des jeweiligen Speicherfaches der Vermittlungseinheit gemeldet und von der Vermittlungseinheit korrigiert.

Zur Durchführung des Verfahrens ist mindestens ein Verwaltungsmodul zwischen Vermittlungseinheit und den Baugruppen der Subsysteme angeordnet, im Verwaltungsmodul ist ein Identifizierer vorhanden und die Baugruppen der Subsysteme sind untereinander mit einem Bussystem verbunden. Im Verwaltungsmodul ist ein Ansagespeicher zum Dialog mit den Teilnehmeranschlüssen vorhanden. Das steigert nicht nur die Bedienerfreundlichkeit, sondern ermöglicht es auch Teilnehmern, die nicht über einen Telefonapparat mit Anzeigenfeld verfügen, die Dienste der Vermittlungsanlage zu nutzen. Bei immer größer werdender Teilnehmerzahl ist es vorteilhaft, daß das Verwaltungsmodul an der Vermittlungseinheit oder dem Subsystem oder jeder Baugruppe angeordnet ist und die Identifizierer aller Verwaltungsmodule jeweils identischen Inhalt aufweisen. Dadurch genügt es, bei geänderter Zuordnung der Teilnehmeranschlüsse nur die Identifizierer zu korrigieren, die weiteren Aufgaben werden von der Verwaltungsmodulen selbst übernommen.

Die Erfindung wird anhand eines zeichnerisch dargestellten Ausführungsbeispieles näher erläutert. Es zeigen:

Fig. 1 die schematische Darstellung des Ausführungsbeispieles und

Fig. 2 die schematische Darstellung einer Baugruppe mit Verwaltungsmodul des Ausführungsbeispieles gemäß Fig. 1.

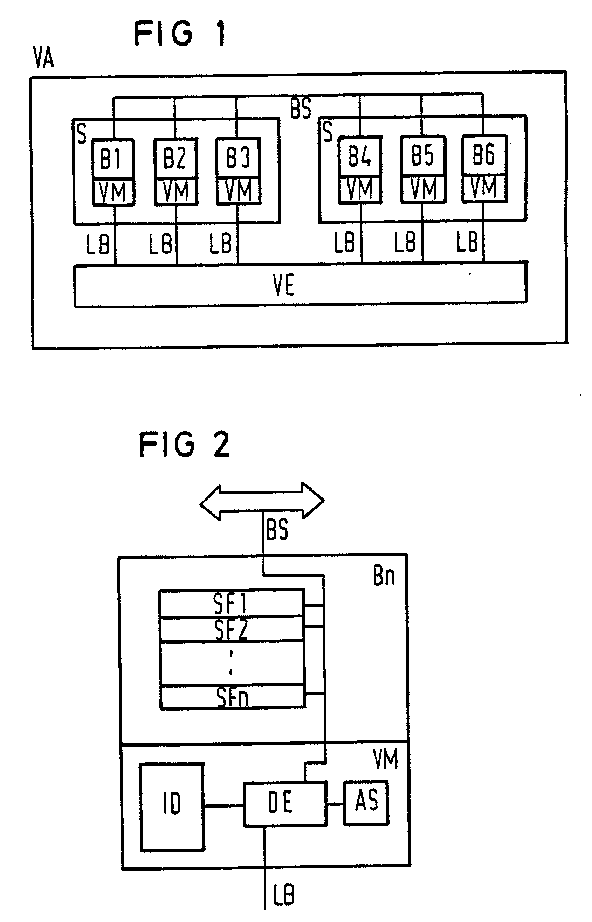

Fig. 1 zeigt eine rechnergesteuerte Vermittlungsanlage VA, die zur Vermittlung von ISDN-Kanälen ausgestattet ist. Sie verfügt über zusätzliche Dienste, wie "Voice Mail" und "Mailbox". Diese werden über Subsysteme S abgewickelt. Dazu sind die Teilnehmeranschlüsse der Vermittlungsanlage VA einzelnen Baugruppen Bl...Bn der Subsysteme S zugeordnet. Bei Inanspruchnahme eines Dienstes werden die Teilnehmeranschlüsse von einer Vermittlungseinheit VE aufgrund der Zuordnung über ein Leitungsbündel LB an die jeweilige Baugruppe B1...Bn angeschaltet. Die eigentliche Steuerung der Vermittlung des Dienstes zwischen der Baugruppe B1...Bn und dem Teilnehmeranschluß erfolgt über ein Verwaltungsmodul VM. Die Baugruppen B1... Bn der Subsysteme S sind über ein eigenes Bussystem BS miteinander verbunden.

Fig. 2 zeigt eine derartige Baugruppe Bn mit angeschlossenem Verwaltungsmodul VM. Ein Teilnehmer A möchte beispielsweise eine Nachricht in einem Speicherfach SF1... SFn eines Teilnehmers B hinterlegen. Dazu wird der Teilnehmer A von der Vermittlungseinheit VE an das Leitungsbündel LB angeschaltet, das der Baugruppe Bn des dem Teilnehmer B zugeordneten Speicherfaches SF1...SFn entspricht. Eine Durchschalteeinheit DE des Verwaltungsmoduls VM prüft mit Hilfe eine Identifizierers ID die Zuordnung des Speicherfaches SF1...SFn des Teilnehmers B und sendet eine Meldung an den Teilnehmer A. Dies erfolgt üblicherweise über den D-Kanal. Bei analogen Teilnehmeranschlüssen kann die Meldung über die Bereitschaft des Speicherfaches SF1...SFn des Teilnehmers B auch mündlich von einem Ansagenspeicher AS aus erfolgen. Die anschliessend über den D-Kanal übermittelte Nachricht wird im Speicherfach SF1...SFn des Teilnehmers B gespeichert.

Im Falle des Anschaltens des Teilnehmers A an eine nicht dem Teilnehmer B zugeordnete Baugruppe B1...Bn stellt die Durchschalteeinheit DE mit Hilfe des Identifizierers ID die richtige Baugruppe B1...Bn fest. Die Durchschalteeinheit DE meldet nun der Vermittlungseinheit VE die Nummer der richtigen Baugruppe B1...Bn und veranlaßt die Korrektur in einer Zuordnungstabelle der Vermittlungseinheit VE. Die bestehende Verbindung wird abgebaut und zur richtigen Baugruppe B1...Bn umgekoppelt.

Ist lediglich die Verbindung eines Teilnehmers zu seinem Speicherfach SF1...SFn über D-Kanal aufzubauen, beispielsweise zum Abruf einer Nachricht aus dem Postfach, und die Durchschalteeinheit DE des Verwaltungsmoduls VM stellt eine falsche Zuordnung fest, so wird über das Bussystem BS vom Verwaltungsmodul VM eine Verbindung zur richtigen Baugruppe B1...Bn des Speicherfaches SF1...SFn des Teilnehmers aufgebaut und die Nachricht dem Teilnehmer übermittelt. Das Verwaltungsmodul VM der richtigen Baugruppe B1...Bn veranlaßt sodann die Korrektur in der Zuordnungstabelle der Vermittlungseinheit VE.

Will nun ein Teilnehmer eine Nachricht aus einem Speicherfach SF1...SFn an andere Teilnehmer verteilen, so kann der Transport logisch oder physikalisch erfolgen. Eine Nachricht wird logisch transportiert, indem eine Kommunikationsauftragsinformation über das Bussystem BS vom Verwaltungsmodul VM der dem Teilnehmer zugeordneten Baugruppe B1...Bn über das Bussystem BS an die entsprechenden anderen Baugruppen B1...Bn geschickt wird. Die Nachricht aus dem Speicherfach SF1...SFn des Teilnehmers wird von der anderen Teilnehmern mit einer separaten Verbindung abgerufen. Dadurch ist eine Nachricht immer nur in einer Baugruppe gespeichert und es erfolgt kein Mehrverbrauch an Speicherkapazität. Bei der Zustellung der Nachricht findet keine zusätzliche Belegung von Leitungen und kein Zugriff zur Speicherung einer Nachrichtenkopie statt. Ein physikalischer Transport der Nachricht erfolgt über den B + D-Kanal zur entsprechenden Baugruppe B1...Bn. Er erfolgt nur dann, wenn der Teilnehmer seine Nachricht auch sofort abrufen kann (im allgemeinen bei "Voice Mail"). Über den D-Kanal wird der Kommunikationsauftrag und über den B-Kanal gleichzeitig die eigentliche Nachricht übertragen. Der physikalische Transport der Nachricht von einer Baugruppe zur anderen erfolgt über die Vermittlungseinheit VE.

Der Identifizierer ID des Verwaltungsmoduls VM ermittelt aus einer persönlichen Identifizierungsnummer des Teilnehmers dessen Rufnummer anhand der Rufnummer die zugeordnete Baugruppe B1...Bn. Diese Zuordnungen müssen in allen Identifizierern ID identisch vorhanden sein, um ein richtiges Umkoppeln oder Verbinden bei falschem Anschalten eines Teilnehmeranschlusses durch die Vermittlungseinheit VE zu ermöglichen. Der Ansagenspeicher AS ermöglicht das Abrufen von Dialogansagen, die zur Abwicklung der Inanspruchnahme eines Dienstes notwendig sind. Die Steuerung der Vermittlung des Dienstes zwischen Teilnehmeranschluß und Speicherfach SF1...SFn erfolgt durch die Identifizierung des rufenden oder gerufenen Teilnehmers und Anschaltung an das entsprechende Speicherfach SF1...SFn, bzw. Veranlassen des Umkoppelns oder Weiterschaltung über das Bussystem BS an eine andere Baugruppe B1...Bn.

**Ansprüche**

1. Verfahren zur Verwaltung der von Subsystemen (S) auszuführenden Dienste einer rechnergesteuerten Vermittlungsanlage (VA), deren Subsysteme (S) in einzelne, gleichartige Baugruppen (B1...Bn) unterteilt sind, die zur Inanspruchnahme des Dienstes jeweils Teilnehmeranschlüssen individuell zugeordnete Speicherfächer (SF1... SFn) enthalten, wobei die Teilnehmeranschlüsse von einer Vermittlungseinheit (VE) angeschaltet werden, **dadurch gekennzeichnet, daß** jeder Teilnehmeranschluß von der Vermittlungseinheit (VE) an ein Verwaltungsmodul (VM) angeschaltet wird, von dem das Speicherfach (SF1...SFn) des rufenden oder gerufenen Teilnehmeranschlusses und die diesem Speicherfach (SF1... SFn) zugeordnete Baugruppe (B1...Bn) festgestellt wird und daß vom Verwaltungsmodul (VM) die Vermittlung des Dienstes zwischen dem Speicherfach (SF1...SFn) und dem Teilnehmeranschluß gesteuert wird.

2. Verfahren nach Anspruch 1, **dadurch gekennzeichnet, daß** bei einem Dienst des Verteilens von Nachrichten von einem Speicherfach (SF1...SFn) zu Speicherfächern (SF1...SFn), die in anderen Baugruppen (B1...Bn) enthalten sind, eine Kommunikationsauftragsinformation an die anderen Baugruppen (B1...Bn) gesandt und bei den gerufenen Speicherfächern (SF1...SFn) hinterlegt wird.

3. Verfahren nach Anspruch 1, **dadurch gekennzeichnet, daß** bei einem Dienst des Verteilens von Nachrichten von einem Speicherfach (SF1...SFn) zu Speicherfächern (SF1...SFn), die in anderen Baugruppen (B1...Bn) enthalten sind, über die Vermittlungseinheit (VE) die Verbindung zu den Baugruppen (B1...Bn) hergestellt und die Nachricht an die gerufenen Speicherfächer (SF1...SFn) übertragen wird.

4. Verfahren nach einem der vorherigen Ansprüche, **dadurch gekennzeichnet, daß** jeder Baugruppe (B1...Bn) der Verwaltungsmodul (VM) zugeordnet wird, wobei diese Zuordnung zur Anschaltung des Teilnehmeranschlusses an die zugehörige Baugruppe (B1...Bn) in der Vermittlungseinheit (VM) gespeichert wird.

5. Verfahren nach Anspruch 4, **dadurch gekennzeichnet, daß** vom jeweiligen Verwaltungsmodul (VM) bei falscher Vermittlung eines Teilnehmeranschlusses durch die Vermittlungseinheit (VE) die richtige Baugruppe (B1...Bn) des Speicherfaches (SF1...SFn) der Vermittlungseinheit (VE) gemeldet, die falsche Nummer der Baugruppe (B1...Bn) von der Vermittlungseinheit (VE) korrigiert und der Anruf von der Vermittlungeinheit (VE) auf die richtige Baugruppe (B1...Bn) umgekoppelt wird.

6. Verfahren nach einem der Ansprüche 4 oder 5, **dadurch gekennzeichnet, daß** im Zusammenhang mit der Vermittlung von ISDN-Kanälen bei falscher Vermittlung des Signalisierungskanals, D-Kanal, vom Verwaltungsmodul (VM) die richtige Baugruppe (B1...Bn) ermittelt, eine Verbindung mit Kommunikationsauftrag zwischen richtiger und falscher Baugruppe (B1...Bn) hergestellt und der auszuführende Dienst übermittelt wird und daß von der richtigen Baugruppe (B1...Bn) über deren Verwaltungsmodul (VM) die Nummer der falschen Baugruppe (B1...Bn) des jeweiligen Speicherfaches (SF1...SFn) der Vermittlungseinheit (VE) gemeldet und von der Vermittlungseinheit (VE) korrigiert wird.

7. Vorrichtung zur Durchführung des Verfahrens nach einem der vorherigen Ansprüche 1 bis 6, wobei zur Verwaltung der von Subsystemen (S) auszuführenden Dienste einer rechnergesteuerten Vermittlungsanlage (VA), deren Subsysteme (S) in einzelne, gleichartige Baugruppen (B1...Bn) unterteilt sind, die zur Inanspruchnahme des Dienstes jeweils Teilnehmeranschlüssen individuell zugeordnete Speicherfächer (SF1... SFn) enthalten, wobei die Teilnehmeranschlüsse von einer Vermittlungseinheit (VE) angeschaltet werden,
**dadurch gekennzeichnet,** daß mindestens ein Verwaltungsmodul (VM) zwischen Vermittlungseinheit (VE) und den Baugruppen (B1...Bn) der Subsysteme (S) angeordnet ist, daß im Verwaltungsmodul (VM) ein Identifizierer (ID) vorhanden ist und daß die Baugruppen (B1...Bn) der Subsysteme (S) untereinander mit einem Bussystem (BS) verbunden sind.

8. Vorrichtung nach Anspruch 7,
**dadurch gekennzeichet,** daß im Verwaltungsmodul (VM) ein Ansagenspeicher (AS) zum Dialog mit den Teilnehmeranschlüssen vorhanden ist.

9. Vorrichtung nach einem der Ansprüche 7 oder 8,
**dadurch gekennzeichnet** daß das Verwaltungsmodul (VM) an der Vermittlungseinheit (VE) oder dem Subsystem (S) oder jeder Baugruppe (B1...Bn) angeordnet ist und die Identifizierer (ID) aller Verwaltungsmodule (VM) jeweils identischen Inhalt aufweisen.

**Claims**

1. Method for controlling the services to be rendered by subsystems (S) of a processor-controlled telephone exchange (VA), the subsystems (S) of which are subdivided into individual identical assemblies (B1...Bn) which in order to utilise the service, in each case contain storage compartments (SF1...SFn) individually allocated to subscriber connections, the subscriber connections being connected by a switching unit (VE), characterised in that each subscriber connection is connected by the switching unit (VE) to a control module (VM) by which the storage compartment (SP1...SFn) of the calling or called subscriber connection and the assembly (B1...Bn) allocated to this storage compartment (SF1...SFn) is determined and in that the switching of the service between the storage compartment (SF1...SFn) and the subscriber connection is controlled by the control module (VM).

2. Method according to Claim 1, characterised in that with a service of distributing messages from one storage compartment (SF1...SFn) to storage compartments (SF1...SFn) which are contained in other assemblies (B1...Bn), communication task information is sent to the other assemblies (B1...Bn) and is stored in the called storage compartments (SF1...SFn).

3. Method according to Claim 1, characterised in that with a service of distributing messages from one storage compartment (SF1...SFn) to storage compartments (SF1...SFn) which are contained in other assemblies (B1...Bn), the connection to the assemblies (B1...Bn) is established via the switching unit (VE) and the message is transmitted to the called storage compartments (SF1...SFn).

4. Method according to one of the preceding claims, characterised in that a control module (VM) is allocated to each assembly (B1...Bn), this allocation for connecting the subscriber connection to the associated assembly (B1...Bn) being stored in the switching unit (VE).

5. Method according to Claim 4, characterised in that, with wrong switching of a subscriber connection by the switching unit (VE), the correct assembly (B1...Bn) of the storage compartment (SF1...SFn) is signalled by the respective control module (VM) to the switching unit (VE), the wrong number of the assembly (B1...Bn) is corrected by the switching unit (VE) and the call is switched to the correct assembly (B1...Bn) by the switching unit (VE).

6. Method according to one of Claims 4 or 5, characterised in that in conjunction with the switching of ISDN channels, when the signalling channel, D channel, is wrongly switched, the correct assembly (B1...Bn) is determined by the control module (VM), a connection with communication task is established between correct and wrong assembly (B1...Bn) and the service to be rendered is transmitted and in that the number of the wrong assembly (B1...Bn) of the respective storage compartment (SF1...SFn) is signalled by the correct assembly (B1...Bn) via its control module (VM) to the switching unit (VE) and is corrected by the switching unit (VE).

7. Device for carrying out the method according to one of the preceding Claims 1 to 6 for controlling the services to be rendered by subsystems of a processor control telephone exchange (VA), the subsystems (S) of which are subdivided into individual identical assemblies (B1...Bn) which, for utilising the service, contain storage compartments (SF1...SFn) in each case individually allocated to subscriber connections, the subscriber connections being connected by a switching unit (VE), characterised in that at least one control module (VM) is arranged between the switching unit (VE) and the assemblies (B1...Bn) of the subsystems (S), that an identifier (ID) exists in the control module (VM) and in that the assemblies (B1...Bn) of the subsystems (S) are connected to one another by means of a bus system (BS).

8. Device according to Claim 7, characterised in that an announcement memory (AS) for a dialogue with the subscriber connections exists in the control module (VM).

9. Device according to one of Claims 7 or 8, characterised in that the control module (VM) is arranged at the switching unit (VE) or the subsystem (S) or each assembly (B1...Bn) and the identifiers (ID) of all the control modules (VM) in each case exhibit identical contents.

## Revendications

1. Procédé pour gérer les services, devant être exécutés par des sous-systèmes (S), d'une installation de commutation (VA) commandée par ordinateur, dont les sous-systèmes (S) sont subdivisés en plusieurs modules identiques (B1...Bn), qui contiennent, pour l'exécution du service, des unités de mémoire (SF1...SFn), qui sont associées, individuellement aux postes d'abonnés, qui sont raccordés par l'unité de commutation (VA), caractérisé par le fait que chaque poste d'abonné est raccordé par l'unité de commutation (VE) à un module de gestion (VM), qui détermine l'unité de mémoire (SF1...SFn) du poste d'abonné appelant ou appelé et le module (B1...Bn) associé à cette unité de mémoire (SF1...SFn), et que la commutation du service entre l'unité de mémoire (SF1...SFn) et le poste d'abonné est commandée par le module de gestion (VM).

2. Procédé suivant la revendication 1, caractérisé par le fait que dans le cas d'un service de distribution d'informations depuis une unité de mémoire (SF1...SFn) à des unités de mémoire (SF1...SFn), qui sont contenues dans d'autres modules (B1...Bn), une information d'ordre de communication est envoyée aux autres modules (B1...Bn) et est mémorisée dans les unités de mémoire (SF1...SFn) appelées.

3. Procédé suivant la revendication 1, caractérisé par le fait que dans le cas d'un service de distribution d'informations d'une unité de mémoire (SF1...SFn) à des unités de mémoire (SF1...SFn), qui sont contenues dans d'autres modules (B1...Bn), la liaison avec les modules (B1...Bn) est établie au moyen de l'unité de commutation (VE) et l'information est transmise aux unités de mémoire (SF1...SFn) appelées.

4. Procédé suivant l'une des revendications précédentes, caractérisé par le fait qu'à chaque module (B1...Bn) est associé un module de gestion (VM), cette association étant mémorisée dans l'unité de commutation (VM) pour le raccordement du poste d'abonné au module associé (B1...Bn).

5. Procédé suivant la revendication 4, caractérisé par le fait que dans le cas d'une commutation erronée d'un poste d'abonné au moyen de l'unité de commutation (VE), le module correct (B1...Bn) de l'unité de mémoire (SF1...SFn) est signalé par le module respectif de gestion (VM) à l'unité de commutation (VE), que le faux numéro du module (B1...Bn) est corrigé par l'unité de commutation (VE) et que l'appel est transféré par l'unité de commutation (VE) au module correct (B1...Bn).

6. Procédé suivant l'une des revendications 4 ou 5, caractérisé par le fait qu'en liaison avec la commutation de canaux ISDN, lors d'une commutation erronée du canal de signalisation, le canal D, le module de gestion (VM) détermine le module correct (B1...Bn), une liaison est établie, avec un ordre de communication, entre le module correct et le module erroné (B1...Bn) et le service devant être exécuté est transmis, et que le numéro du module erroné (B1...Bn) de l'unité respective de mémoire (SF1...SFn) est signalé, par l'intermédiaire du module de gestion (VM) du module correct, à l'unité de commutation (VE) et est corrigé par cette unité.

7. Dispositif pour la mise en oeuvre du procédé selon l'une des revendications 1 à 6 précédentes, dans lequel, pour gérer les services, devant être exécutés par des sous-systèmes (S), d'une installation de commutation (VA) commandée par ordinateur, dont les sous-systèmes (S) sont subdivisés en plusieurs modules identiques (B1...Bn), qui contiennent, pour l'exécution du service, des unités de mémoire (SF1...SFn), qui sont associées, individuellement aux postes d'abonnés, qui sont raccordés par l'unité de commutation (VA), caractérisé par le fait qu'au moins un module de gestion (VM) est disposé entre l'unité de commutation (VE) et les modules (B1...Bn) des sous-systèmes (S), qu'un dispositif d'identification (ID) est présent dans le module de gestion (VM) et que les modules (B1...Bn) des sous-systèmes (S) sont reliés entre eux par un système de bus (BS).

8. Dispositif suivant la revendication 7, caractérisé par le fait qu'une mémoire d'annonces (AS) est prévue dans le module de gestion (VM) pour un dialogue avec les postes d'abonnés.

9. Dispositif suivant les revendications 7 ou 8, caractérisé par le fait que le module de gestion (VM) est disposé dans l'unité de commutation (VE) ou dans le sous-système (S) ou dans chaque module (B1...Bn) et que les dispositifs d'identification (ID) de tous les modules de gestion (VM) possèdent des contenus identiques.

# FIG 1

# FIG 2